# EUROPÄISCHE PATENTANMELDUNG

(11) **EP 1 715 308 A1**
(43) Veröffentlichungstag der Anmeldung: **25.10.2006**
(21) Anmeldenummer: 06004839.4
(22) Anmeldetag: 09.03.2006
(51) Int. Cl.: G01G 11/00

(54) **Gestell für eine Kontrollwaage**

(30) Priorität: 19.04.2005 DE 102005018097
(71) Anmelder: Mettler-Toledo Garvens GmbH, 31180 Giesen (DE)
(72) Erfinder: Berger, Hermann, 31079 Adenstedt (DE); Georgitsis, Nikolaos, 21033 Hamburg (DE)
(74) Vertreter: Leinweber & Zimmermann

(57) **Zusammenfassung**

Ein Gestell für eine Kontrollwaage ist in seiner Grundform aus einem tragenden Längsteil (1) und zwei Querteilen (200, 200') aufgebaut, über die sich das Gestell auf dem Boden abstützt. Weiter ist eine besondere Ausbildung von Längsträgern (300 bis 303) vorgesehen (Fig. 5 (a)).

## Beschreibung

Die Erfindung bezieht sich auf ein Gestell für eine Kontrollwaage, die eine an dem Gestell abgestützte Wägezelle und ein auf der Wägezelle abgestütztes, in einer Längsrichtung umlaufendes Wägeband zum Transport des Wägegutes aufweist, mit einem sich in der Längsrichtung erstreckenden Längsteil des Gestells, an dem mindestens ein sich quer zur Längsrichtung erstreckendes, der Abstützung des Gestells auf dem Boden dienendes Querteil des Gestells festgelegt ist, sowie auf ein Verfahren zur Stabilisierung des Gestells.

Derartige Kontrollwaagen sind weithin bekannt. Sie dienen zur Überprüfung von Packungsgewichten, insbesondere in der pharmazeutischen Industrie und der Lebensmittelindustrie. Die zu überprüfenden Packungen werden auf einem Eingangstransportband zugeführt und von dort aus auf das Wägeband übergeben. Während sie das Wägeband durchlaufen, wird ihr Gewicht von der Wägezelle dynamisch erfaßt. Nach ihrem Durchlauf durch das Wägeband werden die Packungen von einem dem Wägeband nachgeschalteten Ausgangsband abtransportiert. Durch diese dynamische Wägung werden fehlgewichtige Packungen erkannt und von einer Schiebevorrichtung quer zu dem in der Längsrichtung stattfindenden Transport der Packungen ausgestoßen.

Bei diesem dynamischen Wägebetrieb werden insbesondere durch die Übergabe der einlaufenden Packungen vom Eingangsband auf das Wägeband und vom Wägeband auf das Ausgangsband Schwingungen angeregt. Eine weitere Quelle der Schwingungsanregung ist der Betrieb der Schiebevorrichtung. Daraus ergibt sich für das Gestell die Anforderung, diese unerwünschten Schwingungen möglichst stark zu unterdrücken. Ein anderes Problem besteht darin, daß Inhalte der zu wiegenden Packungen, die insbesondere flüssig, körnig oder pulverförmig sein können, durch nicht vermeidbare Unregelmäßigkeiten des Betriebs auf das Gestell gelangen können und dort liegenbleiben.

Die bekannten Gestelle stellen aufwendige Schweißkonstruktionen aus sich in der Längsrichtung und quer dazu erstreckenden Metallstreben dar. Sie sind hinsichtlich der für die Schwingungsunterdrückung notwendigen Stabilität verbesserungsbedürftig. Ferner sind sie gegen Verschmutzungen anfällig und schwer zu reinigen.

In der deutschen Patentanmeldung 103 57 982.6 ist ein Gestell mit einer einfachen Fertigungsstruktur beschrieben, das bezüglich der o. g. Probleme eine Verbesserung des Stands der Technik darstellt. In dieser Anmeldung ist das Querteil in der Form einer flachen Platte ausgebildet, deren Hauptebene sich quer zur Längsrichtung erstreckt. Eine solche Gestaltung des Querteils genügt den Stabilitätsanforderungen in vertikaler Richtung trotz ihrer in Längsrichtung verhältnismäßig geringen Abmessung, da die entsprechende auf das tragende Längsteil des Gestells einwirkende vertikale Belastung von der flachen Platte im wesentlichen in der Richtung ihrer Hauptebene zum Boden hin abgeleitet wird. Gleichzeitig ist bei einem solchen Gestell der waagrecht verlaufende Oberflächenbereich des Querteils verschwindend klein, eine solche Gestaltung also auch aus reinigungstechnischen Gründen vorteilhaft. Des weiteren wird bei einem solchen Gestell die Unterdrückung unerwünschter Schwingungen gefördert, in dem je nach Anforderung die Masse des Gestells durch Befüllung des Längsteils mit z.B. Kies verändert wird.

Ein solches in der Patentanmeldung 103 57 982.6 beschriebenes Gestell erweist sich allerdings hinsichtlich der Unterdrückung von Schwingungen in Längsrichtung (Bandlaufrichtung) als nicht völlig zufriedenstellend. Solche Schwingungen in Längsrichtung treten insbesondere dann auf, wenn Produkte, die auf von dem Gestell getragenen Transportbändern transportiert werden, beim Übergang von einem kundenseitigen Transportband zu den gestellgestützten Bändern eine Geschwindigkeitsänderung erfahren, durch die dann die Impulsbilanz ausgleichende Kräfte auf das Gestell übertragen werden.

Der Erfindung liegt die Aufgabe zugrunde, ein Gestell der eingangs genannten Art derart weiterzubilden, dass es eine in Längsrichtung verbesserte Stabilität aufweist.

Erfindungsgemäß wird diese Aufgabe hinsichtlich des Gestells dadurch gelöst, dass das Querteil in der Form eines Hohlkörpers ausgebildet ist.

Bei dieser erfindungsgemäßen Gestaltung des Gestells dient das Längsteil als tragendes Teil. Dieses kann derart biegesteif und torsionssteif ausgelegt werden, dass die für den jeweiligen Anwendungsfall erforderliche Grundstabilität erzielt wird. Beispielsweise lässt sich mit einem Rundrohr im Durchmesserbereich von 250 bis 300 mm problemlos eine Länge des Gestells von 300 cm in seiner Längsrichtung verwirklichen. Auch längere Gestelle von 500 cm sind mit der Gestellstruktur möglich.

Der das Querteil bildende Hohlkörper weist trotz einer verhältnismäßig geringen Abmessung der Hohlkörperwanddicke eine ausreichende Stabilität in vertikaler Richtung auf, weil die auf das tragende Längsteil des Gestells einwirkende Belastung von dem Hohlkörper im wesentlichen in einer Oberflächenrichtung senkrecht der Wanddickenrichtung abgeleitet wird. Des weiteren und im Vergleich zu einem als flache Platte ausgebildeten Querteil weist das erfindungsgemäße Querteil auch eine hohe Stabilität und Biegesteifigkeit in Längsrichtung auf, da der Hohlkörper Oberflächenbereiche mit Oberflächenrichtungskomponenten parallel zur Längsrichtung besitzt. Damit können insbesondere Schwingungen in Längsrichtung gut aufgenommen werden. Das erfindungsgemäße Querteil ist also derart ausgelegt, dass es eine hohe longitudinale Stabilität bei trotz größerer Flächen noch guten Reinigungsfähigkeit erreicht.

Die Gestaltung der Querteile als Hohlkörper ermöglicht zusätzlich eine weiter verbesserte Schwingungsunterdrückung, da auch sie mit einem Ballaststoff gefüllt werden können. In ungefülltem Zustand dagegen ist der Transport des Gestells erleichtert.

Ein weiterer Lösungsgedanke liegt darin, dass mindestens ein sich parallel zu dem Längsteil erstreckender Längsträger vorgesehen ist, der ein zur Wägezelle weisendes und davon beabstandetes Ende aufweist. Auch der Längsträger sorgt als zusätzliches Versteifungsteil in der Längsrichtung für eine erhöhte longitudinale Stabilität. Eine besonders hohe longitudinale Stabilität wird erreicht, in dem das erfindungsgemäße Querteil und der erfindungsgemäße Längsträger in der Gestaltung des Gestells kombiniert werden.

Der Längsträger weist den zusätzlichen Vorteil auf, dass er auch einer Funktion als Befestigungselement für weitere Komponenten der Kontrollwaage dienen kann, indem etwa Bandlaufkörper an ihm befestigt werden können.

Die Anordnung ist auch in fertigungstechnischer Hinsicht äußerst vorteilhaft. Die kundenspezifischen Dimensionen des Gestells werden durch die Abmessungen des Längsteils und des Querteils bestimmt. Durch entsprechende Ablängung des Längsteils ergibt sich die Gestellabmessung in der horizontalen Richtung. Die Bauhöhe in der vertikalen Richtung läßt sich durch die Dimensionierung des Querteils bestimmen. Dieses kann beispielsweise aus durch Laserschneiden auf besonders einfache Weise aus einer Rohplatte herausgeschnittenen Teilen gefertigt werden. Die Plattenstärke solcher Teile kann beispielsweise unter 10 mm liegen, weil sowohl longitudinale als auch vertikale Kräfte durch die Hohlkörperstruktur getragen werden.

Das erfindungsgemäße Gestell ist auch im Hinblick auf hygienische Anforderungen äußerst vorteilhaft einzusetzen. Die erfindungsgemäß vorgesehenen Hohlkörper können nämlich mit einem stabilitätsfördemden Ballaststoff in Form eines antiseptischen Mediums gefüllt werden. Auf diese Weise kann eine Kontamination der Hohlräume durch Bakteriennester verhindert werden, die beispielsweise auftreten kann, wenn ein Hohlkörper z. B. versehentlich angebohrt wird. Eine solche von außen nicht sichtbare Kontamination ist erfahrungsgemäß besonders deswegen problematisch und gefährlich, da die "versteckten" Bakteriennester auch nach einer Oberflächendekontamination weiterhin in die Umgebung gelangen können, und der Benutzer des Gestells unter Umständen gar nicht weiß, wo die Bakterien, die er immer wieder in seiner Anlage findet, herkommen, ein besonders im Food-Bereich äußerst kritisches Problem.

In seiner Gesamtkonzeption hat das erfindungsgemäße Gestell den Vorteil, wenig verschmutzungsanfällig und gut zu reinigen zu sein, da der Anteil an waagrechten Flächen des Gestells möglichst gering ist, und das Gestell einem Reinigungsstrahl (Richtung bedienerseitig senkrecht zur Längsrichtung) eine möglichst geringe Antriebsfläche bietet.

Eine vorteilhafte Ausführungsform sieht die Querteile als Hohlkörper mit einer im wesentlichen quaderartigen Grundform vor. Im Hinblick auf eine einfache Fertigung kann der Hohlkörper einfach aus zwei parallelen ebenen Seitenflächen und einer die beiden Seiten entlang ihres Umfangs verbindenden Mantelfläche bestehen. Besonders einfach können die Seitenflächen und die Mantelfläche aus durch Laserschneiden aus einer Rohplatte herausgeschnittenen Teilen bestehen.

Die Oberseite der Mantelfläche ist vorteilhaft konvex ausgebildet, um aus reinigungstechnischen Gründen an dieser Stelle keine waagrechte, verschmutzungsanfällige Oberfläche zu erzeugen. Eine ebenfalls nach außen ausgewölbte Gestaltung der Seitenbereiche der Mantelfläche ist besonders im Hinblick auf die Reinigung mit einem parallel zu den Seitenflächen ausgerichteten Reinigungsstrahl vorteilhaft.

In einer vorteilhaften Ausführungsform ist vorgesehen, dass an den beiden Längs-Endbereichen des Längsteils je eines der Querteile angeordnet ist. Hierbei können die beiden Querteile die vertikalen Kopfteile des Gestells bilden, zwischen denen sich das Längsteil erstreckt und an denen es mit seinen Längsenden, beispielsweise durch Schweißen, befestigt ist. Das Längsteil muss aber nicht an den Querteilen enden, sondern kann auch das Querteil durchsetzen oder sich darüber hinaus erstrecken. In diesem Fall sind in den Querteilen entsprechende Löcher ausgeschnitten, durch die das Längsteil im wesentlichen fugendicht geführt ist, wobei es entlang der Berührungskanten, beispielsweise durch Schweißen, befestigt ist.

Zur Unterdrückung von longitudinalen Schwingungen dient auch mindestens ein sich parallel zu dem Längsteil erstreckender Längsträger mit einem zur Wägezelle weisenden und davon beabstandeten Ende. Ein Längsträger ist an einem Querteil z. B. angeschweißt befestigt. Für einen zweiten Abstützpunkt des Längsträgers ist vorteilhaft ein Trägersteg vorgesehen. Ein solcher Trägersteg ist vorzugsweise plattenförmig quer zur Längsrichtung angeordnet (geringe Angriffsfläche für den Reinigungsstrahl) und sich mit einer dem Boden zugewandten Seite auf dem Längsteil abstützend an diesem z. B. durch Schweißen befestigt. Der Längsträger selbst ist dann auf der entgegengesetzten Seite, also der bodenabgewandten Seite des Trägerstegs abgestützt und an diesem z. B. durch Schweißen befestigt.

In einer weiteren vorteilhaften Ausführungsform sind Paare von zwei zueinander parallel angeordneten und voneinander beabstandeten Längsträgern vorgesehen. Dies ist besonders vorteilhaft, da ein solches an einem Querteil und an einem Trägersteg befestigtes Paar, wobei sowohl das Querteil als auch der Trägersteg wiederum an dem Längsteil befestigt sind, ein besonders stabiles Gefüge im Hinblick auf die Unterdrückung longitudinaler Schwingungen bildet.

Weiterhin erweist sich eine Ausführungsform als vorteilhaft, bei der sich ein Paar von Längsträgern von einem Bereich nahe eines Längs-Endbereichs des Längsteils aus in Richtung auf die Gestellmitte erstreckt. Zusammen mit einem weiteren Paar von Längsträgern, das nicht auf ein Querteil, sondern in einem mittigen Bereich des Längsträgers auf mindestens zwei Trägerstegen abgestützt und festgelegt ist, bilden die Paare eine Befestigungsebene, auf der Bandlaufkörper befestigt werden können. Vorteithafterweise fluchten die jeweils einander zugewandten Enden der Längsträger eines jeden Paares quer zur Längsrichtung miteinander, des weiteren ist es von Vorteil, wenn der gegenseitige Abstand der Längsträger eines Paares nicht größer ist als die Breite eines Bandlaufkörpers ist. Dies ist besonders hinsichtlich einer geeigneten Befestigung der Bandkörper auf den Längsträgern vorteilhaft. Auch bilden die Längsträger mit montierten Bandlaufkörpern so kein Hindernis für die Befestigung weiterer Komponenten der Kontrollwaage.

In einer weiteren vorteilhaften Ausführungsform sind die an einem Querteil festgelegten Längsträger auf dem Querteil abgestützt und so in der Lage, über dessen Ende hinaus auszukragen. Eine solche Anordnung ist besonders vorteilhaft, da die Anbringung eines Bandlaufkörpers nicht durch das Querteil begrenzt oder gestört ist. Die Längsträger können auch über das jeweilige stirnseitige Ende des Längsteils hinaus auskragen. Dies hat für den Anwender den Vorteil, dass er auf das Gestell abgestützte Bandlaufkörper benutzen kann, deren Gesamtlänge weiterreicht als die Gesamtlänge des Gestells (Längsteils).

Weiter vorteilhaft sind bei einem dem Boden abgewandten Bereich eines Trägerstegs zwei beabstandete Nasen ausgebildet, und je ein Längsträger eines Paares ist an einer solchen Nase befestigt. Die vom Boden gemessene Höhe der Abstützpunkte der Längsträger, also die entsprechenden Bereiche des Querteils und der vom Boden aus am weitesten entfernte Bereich einer solchen Nase sind dabei so vorgesehen, dass ein Längsträger in Längsrichtung im wesentlichen bodenparallel ausgerichtet ist. Des weiteren hat der nasenförmige Befestigungsbereich der Trägerstege den Vorteil, dass keine anderen Bereiche des Trägerstegs in den Bereich zwischen den Längsträgern eines Paares hineinreicht, ein auf diesen Längsträgern befestigter Bandlaufkörper also in Bandlaufrichtung (Längsrichtung) verschoben werden kann, ohne dass er dabei gegen Bereiche der Trägerstege stößt.

In einer weiteren Ausgestaltung ist mindestens ein sich parallel zu dem Längsteil erstreckendes und an jedem der Querteile festgelegtes weiteres Gestellteil vorgesehen. Insbesondere sind vier solche weiteren Gestellteile vorhanden, deren jedes in einem Eckbereich jeder im wesentlichen rechteckig ausgebildeten Seitenflächen der/plattenförmigen Querteile zugeordnetem Bereich festgelegt ist. Zur weiteren Versteifung des Gestells können insbesondere längs der Längsrichtung in gewissen Abständen Querstege mit in der Längsrichtung geringer Dicke vorgesehen sein, die sowohl mit dem Längsteil als auch mit mindestens einem der weiteren Gestellteile verbunden sind. Diese weiteren Gestellteile haben zum einen den Vorteil, dass sie zusammen mit den Querstegen der weiteren Versteifung des Gestells dienen. Des weiteren haben sie aber auch den Vorteil, abgesehen von der Befestigungsebene der Längsträger eine weitere Befestigungsmöglichkeit von Komponenten der Kontrollwaage darzubieten.

Geeigneterweise sind, betreffend der Querschnitte aller vorhandenen in Längsrichtung angeordneten Teile, der Querschnitt eines weiteren Gestellteils klein gegenüber dem Querschnitt des Längsteils, und der Querschnitt eines Längsträgers wiederum kleiner als der Querschnitt eines weiteren Gestellteils. Dies hat den Vorteil, dass die in weit überwiegendem Maße tragende und stabilisierende Funktion des Längsteils auch optisch zur Geltung kommt. Des weiteren sind die verhältnismäßig kleinen Querschnitte der Längsträger besonders gut zur Befestigung eines Bandkörpers mit einer einfachen Klemmvorrichtung an diesem geeignet.

In einer weiteren Ausführungsform sind die Seitenwandbereiche bzw. die Seitenkanten des Querteils derart eingebuchtet, dass das Querteil nicht über die weiteren Gestellteile hinausragt. Auf diese Weise stellt das Querteil kein Hindernis für die Befestigung von Komponenten der Kontrollwaage wie Behälter, Pusher usw. dar, insbesondere können solche Bauteile auch direkt an der Stelle des Querteils befestigt sein. Einer solchen variablen Befestigungsmöglichkeit für die Komponenten der Kontrollwaage dient auch eine weitere Ausgestaltung, in der sich auch die weiteren Gestellteile über ein Querteil hinaus erstrecken können. Geeigneterweise fluchten dabei die jeweils benachbarten Enden des Längsteils und der weiteren Gestellteile miteinander quer zur Längsrichtung.

Mit Vorteil sind das Längsteil und/oder die weiteren Gestellteile und/oder die Längsträger in ihrem dem Boden abgewandten Bereich konvex geformt. Durch diese konvexe Ausbildung des nach oben weisenden Querschnittsbereichs treten keine nach oben gerichteten horizontalen Flächen auf, auf denen festes oder flüssiges Wiegegut liegenbleiben könnte. Vielmehr weisen dadurch solche in Längsrichtung liegende Teile nach oben hin zur Horizontalen geneigte Oberflächen auf, von denen ggf. herabfallendes Wiegegut abrutscht oder abfließt. Diese Voraussetzungen sind insbesondere für kreisförmige Querschnitte erfüllt. Für rechteckige Querschnitte ist es zur Erfüllung dieser Voraussetzungen ausreichend, die Querschnittsdiagonale senkrecht zum Boden auszurichten.

Zweckmäßig ist der Querschnitt der Längsträger in einer weiteren Ausführungsform elliptisch, insbesondere kreisförmig ausgebildet. Solche Längsträger eignen sich besonders gut dafür, als Aufsatzteile für an den Bandlaufkörpem vorgesehene einfache Klemmvorrichtungen zu dienen. Dabei kann z. B. eine Klemmvorrichtung eine der Form des Querschnitts des Längsträgers entsprechende Ausnehmung besitzen, in die der Längsträger aufgenommen und dann durch einen die Ausnehmung verschließenden Riegel festgeklemmt wird.

Im Rahmen der Erfindung ist auch vorgesehen, dass das Längsteil als Hohlrohr ausgebildet ist, und wie die hohlkörperartigen Querteile mit einem Ballaststoff gefüllt werden kann. Durch die Befüllung der Hohlkörper mit einem Ballaststoff, der beispielsweise ein Schüttgut wie Kies sein kann, lässt sich die Gestellmasse erheblich steigern und dadurch ein entsprechend hohes Maß an Schwingungsunterdrückung erreichen. Geeignete Ballaststoffe wie Kies stehen üblicherweise sehr preisgünstig am Aufstellungsort des Gestells zur Verfügung. Gleichzeitig kann das Gestell im unbefüllten Zustand bei erheblich verringertem Gewicht viel leichter zu seinem Aufstellungsort transportiert werden. Vorteilhaft weisen das Längsteil und ggf. die hohlkörperartigen Querteile eine insbesondere mit einer Schnellkupplung versehene Einfüllöffnung auf. Auf diese Weise kann die Befüllung der Hohlkörper problemlos durchgeführt werden.

Weiterhin sind die Hohlkörper vorteilhaft auch mit einer Auslassöffnung versehen, insbesondere einer schraubverschlussartigen Auslassöffnung, und ggf. mit einem Entlüftungsrohr, das sich geeigneterweise von einem unteren Bereich bis zu einem obersten Bereich des Innenraums des Hohlkörper erstreckt. Dies ist besonders dann vorteilhaft, wenn die Hohlkörper z. B. für einen zwischenzeitlichen Transport wieder entleert werden sollen, insbesondere falls es sich bei dem Ballaststoff um einen flüssigen Ballaststoff handelt.

In einer besonders vorteiligen Ausführungsform handelt es sich bei dem Ballaststoff um ein antiseptisches Medium. Auf diese Weise gefüllte Hohlkörper verhindern die Kontamination durch Bakteriennester in ihrem Innenraum. Insbesondere werden auf diese Weise auftretende Löcher oder Lecke eines Hohlraums automatisch desinfiziert. Eine Verwendung von H₂O mit beigegebenem Desinfektionsmittel erreicht diesen Vorteil auf eine besonders einfache und kostengünstige Art.

In einer weiteren Ausgestaltung kann das antiseptische Medium eingefärbt sein. Ein Leck in einem der Hohlkörper kann durch das folglich austretende eingefärbte antiseptische Medium sofort bemerkt und darauf reagiert werden.

Im Regelfall wird die Höhe des Gestells, und damit die Höhe der Transportbandkörper durch die Höhenabmessung der Querteile bestimmt. In einer weiteren vorteiligen Ausführungsform sind weiterhin zur Abstützung des Gestells auf dem Boden dienende Füße vorgesehen, die an dem Querteil befestigt sind, insbesondere können höhenverstellbare Füße an das Querteil z. B. angeschraubt sein. Auf diese Weise kann kundenseitig eine Höhenfeineinstellung erreicht werden, des weiteren können so auch lokale Bodenunebenheiten ausgeglichen werden.

Die vorliegende Erfindung umfasst in ihrem Schutzbereich auch ein Verfahren zur Stabilisierung eines Gestells für eine Kontrollwaage. Dies wird im wesentlichen durchgeführt, indem durch Öffnen der Einfüllöffnung, folgende Befüllung des Hohlraums mit einem Ballaststoff und darauffolgende Schließung der Einfüllöffnungen die Masse des Gestells erhöht wird, was zu einem hohen Maß an Schwingungsunterdrtickung führt.

Mit Vorteil wird dieses Verfahren durchgeführt, indem als Ballaststoff ein antiseptisches Medium eingefüllt wird. Das Stabilisierungsverfahren dient also auch als Verfahren zur Dekontamination von Hohlräumen eines Gestells für eine Kontrollwaage.

Geeignet wird das Verfahren am Einsatzort des Gestells durchgeführt. Dies hat nicht nur den Vorteil, dass das noch nicht durch Massenerhöhung stabilisierte Gestell leichter zum Einsatzort zu transportieren ist, sondern auch, dass der Kunde ein erhöhtes Sicherheitsgefühl bekommt, wenn das Verfahren fachmännisch vor seinen Augen durchgeführt wird.

In der folgenden Beschreibung sind Ausführungsformen der Erfindung unter Bezugnahme auf die Zeichnung näher erläutert. Hierin zeigen:
- Fig. 1: eine grundlegende Ausführungsform eines Gestells in
(a) perspektivischer Ansicht
(b) seitlicher Aufsicht,
(c) stirnseitige Aufsicht, und
(d) Aufsicht von oben;
- Fig. 2: den Fig. 1 (a) bis 1 (d) entsprechende Ansichten des Gestells mit daran angeordneten Komponenten;
- Fig. 3: eine perspektivische Ansicht einer anderen grundlegenden Ausführungsform eines Gestells;
- Fig. 4: eine perspektivische Ansicht einer weiteren grundlegenden Ausführungsform eines Gestells;
- Fig. 5: eine Ausführungsform eines erfindungsgemäßen Gestells in
(a) seitlicher Aufsicht,
(b) stirnseitiger Aufsicht, und
(c) Aufsicht von oben;
- Fig. 6: den Fig. 5(a) bis 5(c) entsprechende Ansichten des erfindungsgemäßen Gestells mit daran angeordneten Komponenten, sowie
(d) einer Aufsicht von unten;
- Fig. 7: den Fig. 5(a) bis 5(c) entsprechenden Ansichten einer weiteren Ausführungsform eines erfindungsgemäßen Gestells.

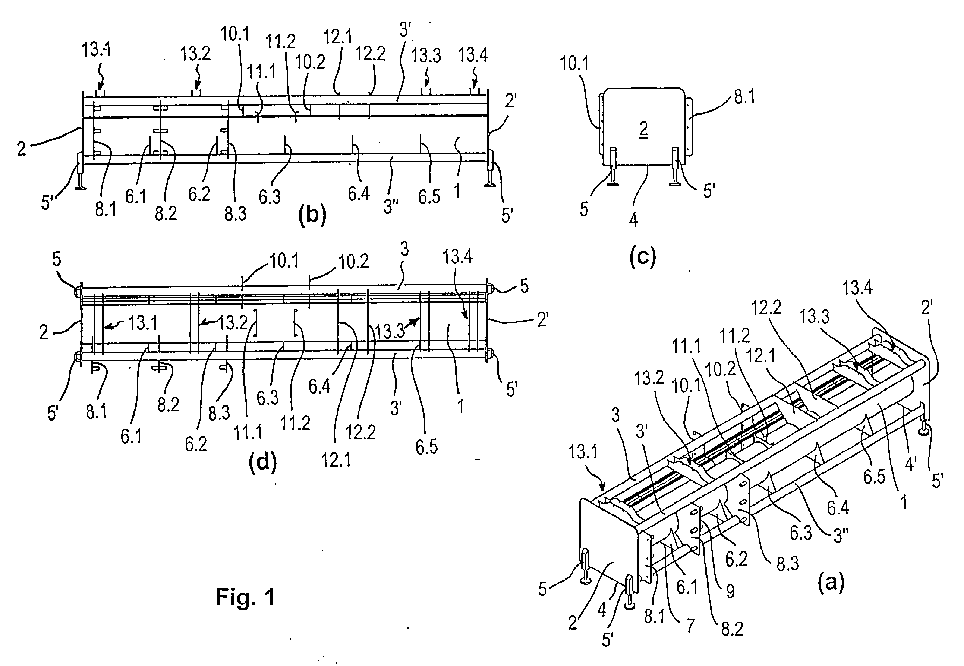

Zunächst wird in bezug auf die Figuren 1 bis 4 ein Gestell beschrieben, das lediglich zur Erläuterung der für die weiter unten beschriebenen Ausgestaltungen maßgeblichen Ausgangspunkte dient.

Ein in Fig. 1 in verschiedenen Ansichten dargestelltes Gestell weist als Längsteil ein zentrales zylindrisches Rohr 1 auf, dessen Zylinderachse eine Längsrichtung des Gestells bestimmt. Das Rohr 1 ist derart biege- und torsionssteif ausgebildet, daß es eine gewünschte Tragfähigkeit und Stabilität des Gestells sicherstellt. An den beiden Längsenden des Rohrs 1 ist jeweils ein im wesentlichen quadratisches Querteil 2, 2' angeschweißt, dessen Hauptebene sich quer zur Zylinderachse des Rohrs 1 erstreckt, wobei die Zylinderachse jeweils durch einen Mittenbereich der Querteile 2, 2' verläuft. Die Querteile 2, 2' sind aus einer im Vergleich zur Länge des zentralen Rohrs 1 sehr dünnen Blechplatte mit Hilfe eines Laserschneidstrahls herausgeschnitten.

In einem in bezug auf die Zylinderachse radialen Abstand von dem zentralen Rohr 1 erstrecken sich parallel zur Längsrichtung vier weitere Gestellteile, die jeweils mit ihren Längsenden auf die Querteile 2, 2' in deren Eckbereichen treffen und dort mit den Querteilen 2, 2' verschweißt sind. In Fig. 1 sind drei dieser weiteren Gestellteile sichtbar und mit den Bezugszeichen 3, 3', 3" bezeichnet. Die Sicht auf das vierte Gestellteil ist durch das zentrale Rohr 1 verstellt.

Die weiteren Gestellteile 3, 3', 3" sind ebenso wie das zentrale Rohr 1 durch zylindrische Rohre gebildet. Doch ist ihr Querschnitt jeweils wesentlich kleiner als der Querschnitt des zentralen Rohrs 1. Somit nimmt das zentrale Rohr 1 einen inneren kreisscheibenförmigen Bereich jedes der beiden plattenförmigen Querteile 2, 2' ein, während die vier weiteren Gestellteile 3, 3', 3" in dem diesen inneren Bereich umgebenden Randbereich der plattenförmigen Querteile 2, 2' mit den Querteilen zusammentreffen.

Zur Abstützung des Gestells auf dem Boden sind an jedem der beiden plattenförmigen Querteile 2, 2' in dessen an seine zum Boden weisende Außenkante 4 angrenzendem Bereich unter gegenseitigem Abstand zwei Füße 5, 5', beispielsweise durch Schweißen, befestigt. Die Füße 5, 5' sind höhenverstellbar ausgebildet, indem ihre zum Boden weisenden Teile mehr oder weniger tief in ihre an den Querteilen 2, 2' befestigten Teile eingeschraubt werden können.

Zwischen den plattenförmigen Querteilen 2, 2' sind fünf plattenförmige untere Querstege 6.1 bis 6.5 vorgesehen, die sich parallel zur Hauptebene der Querteile 2, 2' erstrecken und in der Längsrichtung unter gleichbleibendem gegenseitigen Abstand angeordnet sind. Denselben Abstand nehmen die den Querteilen 2, 2' unmittelbar benachbarten unteren Querstege 6.1 bzw. 6.5 zu den Querteilen 2, 2' ein. Die unteren Querstege 6.1 bis 6.5 sind an ihrem zum Boden weisenden Ende durch eine im wesentlichen gerade Kante 7 begrenzt, die sich zwischen den beiden dem Boden benachbarten Gestellteilen erstreckt, deren eines in Fig. 1 unter dem Bezugszeichen 3" sichtbar ist. Mit diesen beiden Gestellteilen sind die unteren Querstege 6.1 bis 6.5 jeweils, beispielsweise durch Schweißen, verbunden. Das der Kante 7 entgegengesetzte Ende der unteren Querstege 6.1 bis 6.5 ist komplementär zu dem Querschnitt des zentralen Rohrs 1 etwa halbkreisförmig ausgenommen und mit dem zentralen Rohr 1 über die Länge dieser Ausnehmung verschweißt. Durch diese Anordnung wirken die unteren Querstege 6.1 bis 6.5 als zusätzliche Versteifung des Gestells.

Zwischen den in bezug auf den Boden vertikal übereinanderliegenden weiteren Gestellteilen 3', 3" erstrecken sich drei Halteplatten 8.1 bis 8.3. Diese Halteplatten weisen ebenfalls in der Längsrichtung nur eine sehr geringe Dicke auf und verlaufen parallel zur Hauptebene der Querteile 2, 2'. Die in bezug auf das Gestell nach außen weisende vertikale Außenkante 9 jeder Halteplatte 8.1 bis 8.3 ist gerade geformt. In ihrem der Außenkante 9 horizontal gegenüberliegenden Bereich ist jede der Halteplatten 8.1 bis 8.3 dem Querschnitt des zentralen Rohrs 1 folgend kreisbogenförmig ausgenommen und mit dem zentralen Rohr 1 beispielsweise durch Schweißen verbunden. Entsprechende Verbindungen bestehen zwischen jeder der Halteplatten 8.1 bis 8.3 und den beiden Gestellteilen 3', 3".

Ein den Halteplatten 8.1 bis 8.3 ähnliches Paar von Halteplatten 10.1, 10.2 ist auf der den Halteplatten 8.1 bis 8.3 horizontal entgegengesetzten Seite des Gestells vorgesehen. Die Halteplatten 10.1, 10.2 sind mit dem oberen Gestellteil 3 und dem in Fig. 1 nicht sichtbaren unteren Gestellteil sowie mit dem zentralen Rohr 1 auf ähnliche Weise verbunden wie die Halteplatten 8.1 bis 8.3.

Im Bereich der Längsmitte des Gestells ist auf der dem Boden entgegengesetzten Oberseite des zentralen Rohrs 1 ein Paar von Haltestegen 11.1. 11.2 angeordnet, die sich parallel zur Hauptebene der Querteile 2, 2' erstrecken. Sie sind an ihrer zum zentralen Rohr 1 weisenden Seite komplementär zum Querschnitt des zentralen Rohrs 1 kreisbogenförmig ausgenommen und längs dieser Ausnehmung mit dem zentralen Rohr 1 verschweißt. Ihr dazu entgegengesetztes Ende ist gerade ausgebildet und verläuft horizontal.

In bezug auf die Längsrichtung seitlich der Haltestege 11.1, 11.2 erstreckt sich parallel zur Hauptebene der Querteile 2, 2' ein Paar von oberen Querstegen 12.1, 12.2, die in bezug auf die Zylinderachse des zentralen Rohrs 1 im wesentlichen spiegelsymmetrisch zu den unteren Querstegen 6.1 bis 6.5 geformt und in analoger Weise wie diese an dem zentralen Rohr 1 und den beiden oberen Gestellteilen 3, 3' festgelegt sind.

Weiterhin erstrecken sich zwischen den beiden oberen Gestellteilen 3, 3' parallel zur Hauptebene der plattenförmigen Querteile 2, 2' insgesamt vier Träger 13.1 bis 13.4, auf denen die Bandlaufkörper montiert werden können.

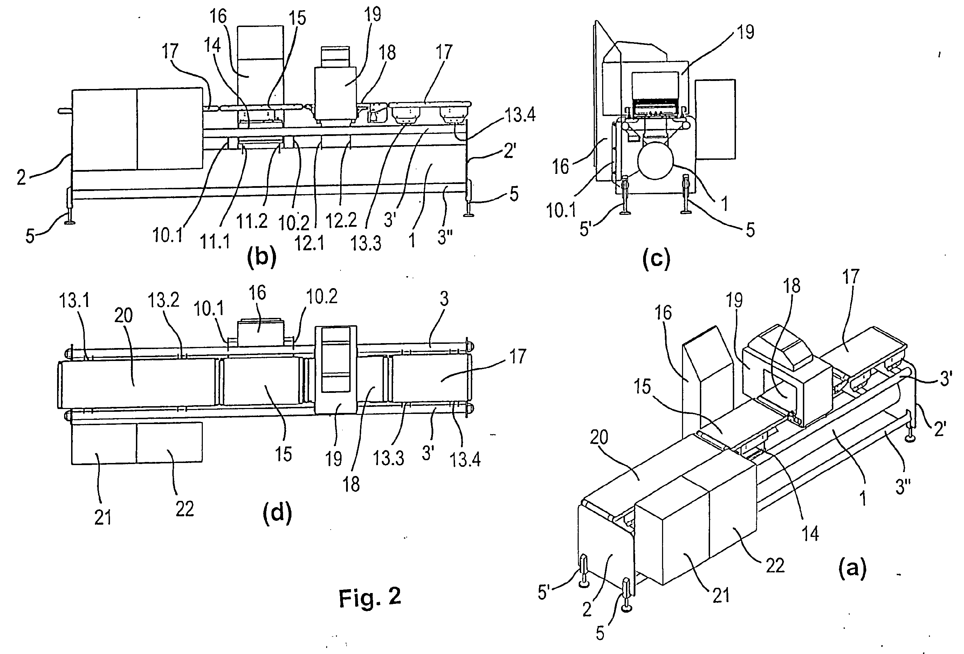

In Fig. 2 ist das in Fig. 1 dargestellte Gestell mit folgenden Komponenten bestückt: Auf den Haltestegen 11.1, 11.2 ist eine Wägezelle 14 montiert, auf der ein in der Längsrichtung umlaufendes Wägeband 15 abgestützt ist. Die Wägezelle 14 ist an eine Steuer- und Auswerteeinrichtung angeschlossen, die den Betrieb als Kontrollwaage unterstützt. Diese Steuer- und Auswerteeinrichtung ist in einem Gehäuse 16 untergebracht, das an den seitlichen Halteplatten 10.1, 10.2 befestigt ist.

Bei dem Kontrollwaagenbetrieb werden Packungen auf das Wägeband 15 aufgegeben und während ihres Durchlaufs durch das Wägeband 15, dessen Transportrichtung in den Ansichten von Fig. 2 von rechts nach links verläuft, mittels der Wägezelle 14 dynamisch gewogen. Die Zufuhr der Packungen erfolgt über ein dem Wägeband 15 in bezug auf die Laufrichtung vorgeschaltetes Eingangsband 17. Dieses ist auf den beiden Trägern 13.3 und 13.4 montiert. Das Auslaufende des Eingangsbandes 17 grenzt an das Einlaufende eines ebenfalls in der Längsrichtung umlaufenden Transportbandes 18 eines tunnelartig ausgebildeten Metalldetektors 19 an. Auf diese Weise übernimmt das Transportband 18 die von dem Eingangsband 17 zugeführten Packungen und führt sie durch den Metalldetektor 19 hindurch zum Auslaufende des Transportbandes 18. Letzteres grenzt an das Einlaufende des Wägebandes 15 an und übergibt dadurch die Packungen auf das Wägeband 15. Dieser Metalldetektor 19 ist an den oberen Querstegen 12.1, 12.2 montiert.

An das Auslaufende des Wägebands 15 grenzt das Eingangsende eines Ausgangsbandes 20 an, das die gewogenen Packungen von dem Wägeband 15 übernimmt und in der Längsrichtung abfördert. Das Ausgangsband 20 ist an den Trägern 13.1 und 13.2 abgestützt.

Entlang dem Ausgangsband 20 sind zwischen den seitlichen Halteplatten 8.1 und 8.2 bzw. 8.2 und 8.3 zwei Auswurfbehälter 21, 22 festgelegt. In diese Auswurfbehälter werden mit Hilfe von nicht dargestellten Schiebeeinrichtungen, die quer zur Transportrichtung des Ausgangsbandes 20 wirksam sind und die von der in dem Gehäuse 16 angeordneten Steuer- und Auswerteeinrichtung gesteuert werden, solche Packungen ausgeworfen, für die der Metalldetektor 19 angesprochen hat oder die als Ergebnis der dynamischen Wägung mittels der Wägezelle 14 als fehlgewichtig erkannt wurden.

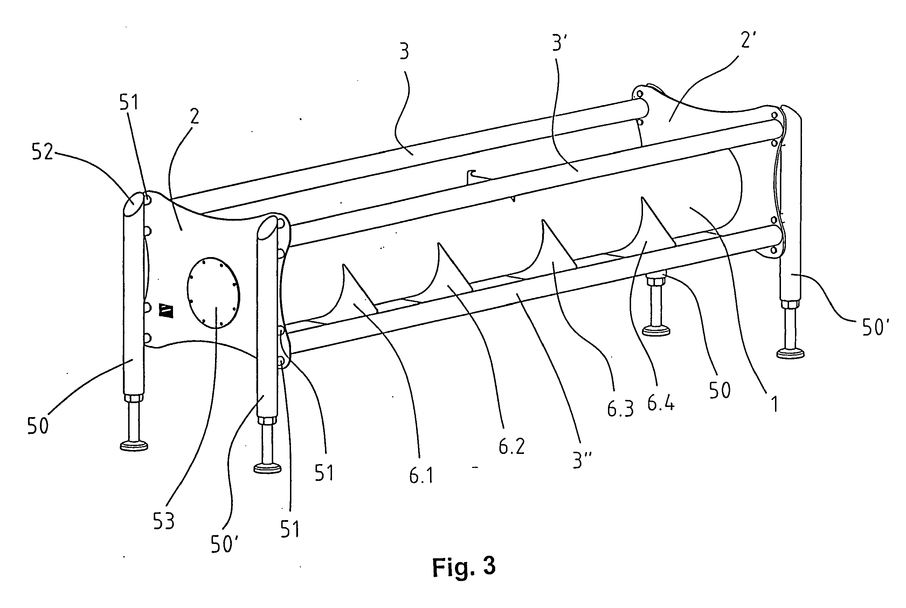

Die in Fig. 3 dargestellte Ausführungsform des Gestells weicht von der in den Fig. 1 und 2 dargestellten Ausführungsform dadurch ab, daß in Fig. 3 die Füße 50, 50' in bezug auf die Längsrichtung des Gestells in einem kleinen Abstand vor dessen plattenförmigen Querteilen 2, 2' angeordnet sind. Dieser Abstand wird durch Distanzelemente 51 eingestellt, die sich zwischen den jeweiligen Füßen 50, 50' und den jeweiligen Querteilen 2, 2' in der Längsrichtung des Gestells erstrecken. Ein weiterer Unterschied besteht darin, daß die Füße 50, 50' sich säulenförmig im wesentlichen über die gesamte vertikale Höhe der Querteile 2, 2' erstrecken.

Im übrigen kann das in Fig. 3 dargestellte Gestell alle in den Fig. 1 und 2 dargestellten Ausbauelemente enthalten. In dem in Fig. 3 dargestellten Ausbauzustand sind die auch in der Ausführungsform von Fig. 1 und 2 vorhandenen weiteren Gestellteile 3, 3' und 3" erkennbar. Weiter zeigt Fig. 3 die auch in Fig. 1 und 2 vorhandenen unteren Querstege 6.1 bis 6.4, die nur hinsichtlich ihrer Anzahl von den Fig. 1 und 2 abweichen. Im Vergleich zu Fig. 1 und 2 sind in Fig. 3 die Ränder der Querteile 2, 2' von den Ecken aus bogenförmig geringfügig einwärts verlaufend geformt. Die Befestigung der Füße 50, 50' an den Querteilen 2, 2' liegt im Bereich der Ecken. Die oberen Enden 52 der Füße 50, 50' sind als gegenüber der Horizontalen geneigte Flächen ausgebildet, damit auch dort keine Ablagerungen liegenbleiben können.

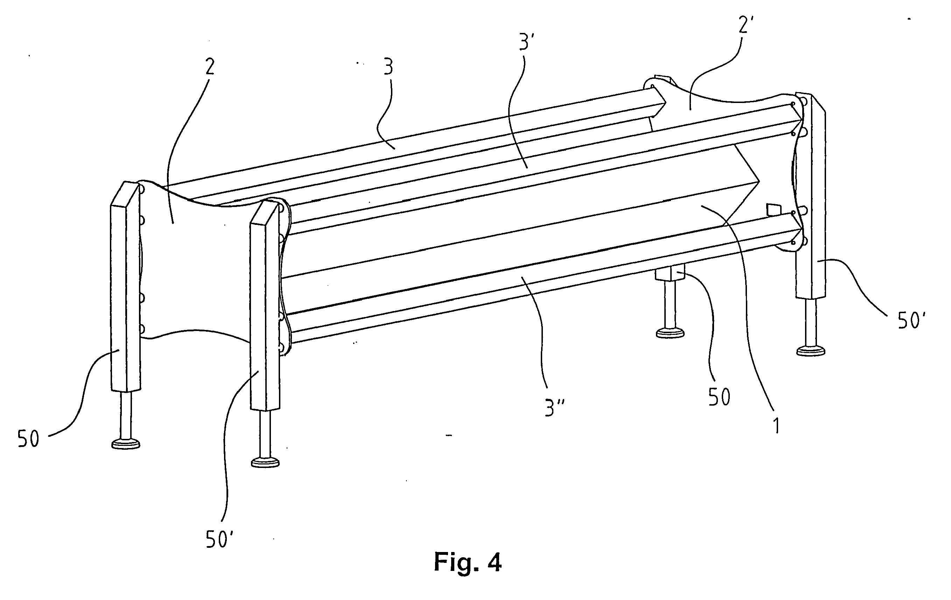

Die in Fig. 4 dargestellte Ausführungsform des Gestells entspricht der in Fig. 3 dargestellten Ausführungsform mit der Ausnahme, daß abweichend von den kreisförmigen Querschnitten des zentralen Rohrs 1, der Gestellteile.3, 3', 3" und der Füße 5, 5' in Fig. 3 diese Teile in Fig. 4 einen quadratischen oder rechteckigen Querschnitt aufweisen. Um auch in diesem Fall die Ansammlung von Ablagerungen zu vermeiden, sind das zentrale Rohr 1 und die Gestellteile 3, 3', 3" derart ausgerichtet, daß die Diagonalen ihrer quadratischen oder rechteckigen Querschnitte vertikal, d. h. senkrecht zum Boden, ausgerichtet sind.

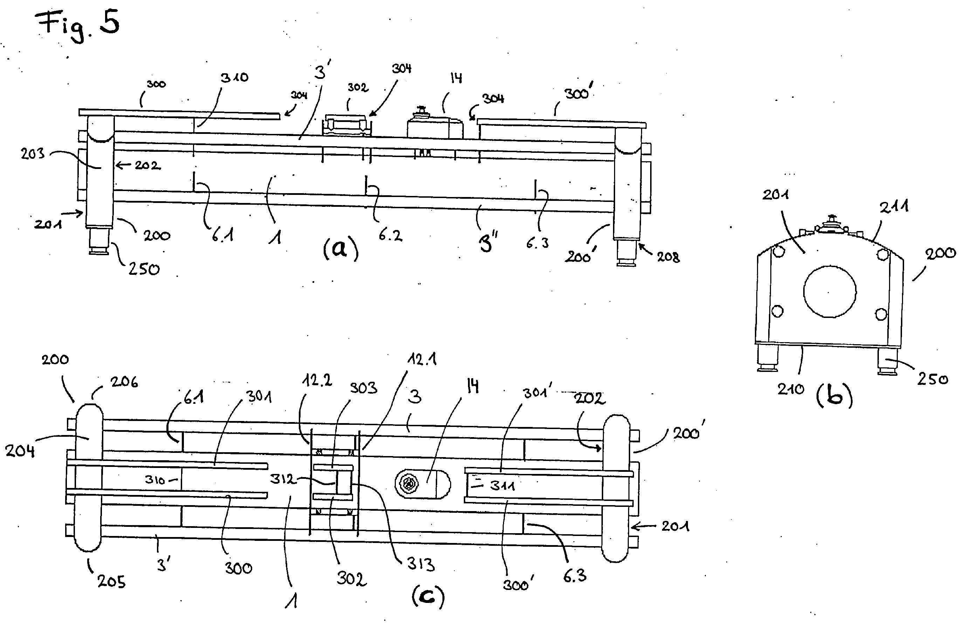

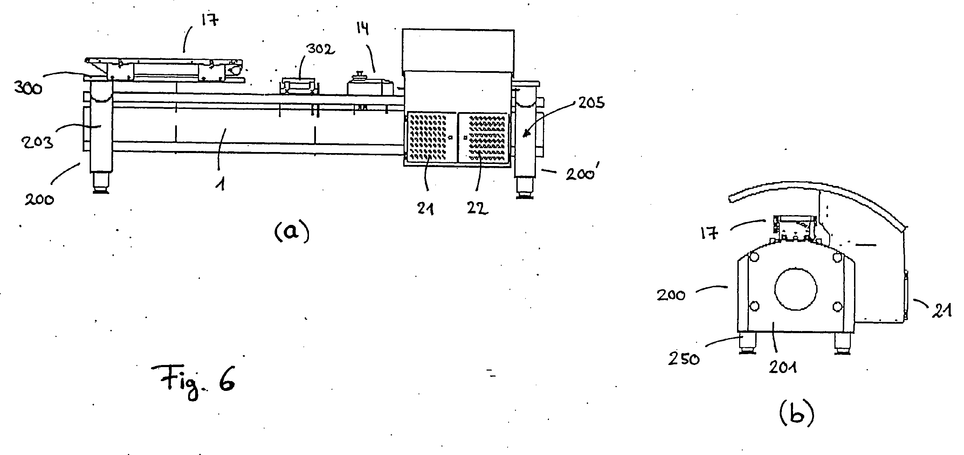

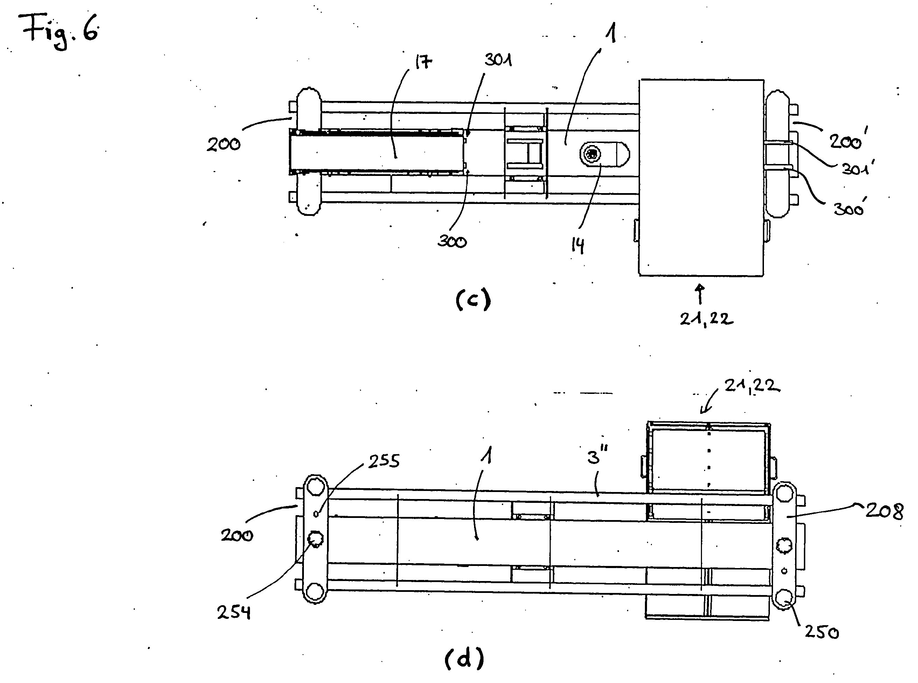

In den Figuren 5 bis 7 werden nun erfindungsgemäß ausgestaltete Ausführungsformen des Gestells beschrieben. Im Vergleich zu den Figuren 1 bis 4 ist hier darauf zu achten, dass die Transportrichtung, insbesondere in der Ansicht von Fig. 6, von links nach rechts verläuft (und nicht wie in den Ansichten von Fig. 2 von rechts nach links). Des weiteren wird der Grundaufbau des Gestells nicht noch einmal wiederholt, es gilt dass entsprechende Teile mit den jeweils entsprechenden Bezugsnummern bezeichnet sind. Im folgenden werden also die Änderungen eines erfindungsgemäßen Gestells gegenüber dem der Erfindung zugrundeliegenden Gestell anhand vorteilhafter Ausführungsformen beschrieben.

Bei der in Fig. 5 dargestellten Ausführungsform weist das Gestell zwei hohlkörperartige Querteile 200, 200', und eine Mehrzahl von Längsträgern 300, 301, 300', 301', 302, 303 auf. Die Längsträger 300 bis 303 können aber auch unabhängig von den hohlkörperartigen Querteilen 200, 200' in Fig. 5 mit den plattenartigen Querteilen 2. 2' gemäß Fig. 1 realisiert werden.

In der in Fig. 5 dargestellten Ausführungsform treten die zwei hohlkörperartigen Querteile 200, 200' wie in den Fig. 5a und 5c dargestellt ist, an den Längs-Endbereichen des Längsteils 1 an die Stelle der in Fig. 1 gezeigten plattenartigen Querteile. Das hohlkörperartige Querteil 200 besitzt zwei ebene, parallele Seitenflächen 201 und 202. Diese sind entlang ihrer Umrandung von einer Mantelfläche 203 umgeben und werden von dieser verbunden. Alle Flächen 201, 202, 203 sind aus einer im Vergleich zur Länge des zentralen Rohrs 1 sehr dünnen Blechplatte mit Hilfe eines Laserschneidstrahls herausgeschnitten, wobei die Mantelfläche 203 nicht einstückig ausgebildet sein muß. Die Mantelfläche 203 weist zwei Seitenbereiche 205 und 206, einen Deckenbereich 204 sowie einen dem Boden zugewandten Bereich 208 auf. Wie in Fig. 5b gezeigt ist, ist der deckenseitige Bereich 204 der Mantelfläche 203 konform einer konvex ausgebildeten Deckenkante 211 der Seitenfläche 201 konvex geformt. Aus Fig. 5c ist zu entnehmen, dass auch seitliche Bereiche 205, 206 der Mantelfläche 203 nach außen gewölbt sind. Beide Querteile 200, 200' stehen auf höhenverstellbaren Füßen 250, die von unten an die Bodenfläche 208 der Mantelfläche 203 angeschraubt sind. Die Füße können aber auch seitlich an dem Querteil angebracht sein, wie z. B. in Fig. 3 dargestellt ist. Die Füße 250 selbst sind in dieser Ausführungsform höhenverstellbar.

Wie besonders gut in den Fig. 5a und 5c gezeigt ist, ragen sowohl das Längsteil 1 und die weiteren Gestellteile 3, 3', durch die Querteile 200, 200' hindurch, als auch die Längsträger 300, 301, 300', 301' über die Querteile 200, 200', auf denen sie abgestützt und festgelegt sind, hinaus. Es wäre aber auch eine Anordnung denkbar, in der z. B. das Längsteil 1 und die weiteren Gestellteile 3, 3', 3" mit einem oder beiden Querteilen 200, 200' abschließen.

In dieser Ausführungsform sind drei Paare von Längsträgern vorhanden, deren erstes die Längsträger 300, 301, abgestützt auf dem Querteil 200 und dem Trägersteg 310, deren zweites die Längsträger 300', 301', abgestützt auf dem Querteil 200' und dem Trägersteg 311, sowie deren drittes kürzere Längsträger 302, 303, die auf den zwei Trägerstegen 312 und 313 abgestützt und festgelegt sind, aufweist. Die Befestigung der Längsträger auf den Querteilen bzw. Trägerstegen ist durch Schweißen realisiert.

Betreffend dieser Trägerstege sind in dieser Ausführungsform nur deren Mindestanzahl von einem Trägersteg für die Längsträger 300, 301 und 300', 301' sowie zwei für die Längsträger 302, 303 realisiert. Je nach Länge der entsprechenden Paare können natürlich aber auch weitere Trägerstege montiert werden. Wie in Fig. 5a gezeigt ist, sind die Trägerstege 310, 311, 313 auf dem Längsteil 1 abgestützt und festgelegt, hier durch Aufschweißen. Die an der dem Boden entgegengesetzten Seite der Trägerstege 310 bis 313vorhandenen ausgebildeten Nasen, an denen die Längsträger 300 bis 303 angeschweißt sind, sind in der Zeichnung nicht zu sehen, wohl aber, dass kein Bereich eines Trägerstegs über die durch die Längsträger definierte Ebene hinausragt. Im übrigen sind die Trägerstege 310 bis 313 analog den Haltestegen 11.1, 11.2 gemäß Fig. 1 angeordnet und befestigt, abgesehen davon, dass sie höher als diese nach oben ragen.

In dieser Ausführungsform liegen also die Trägerstangen 300, 301, 300', 301', wie in den Fig. 5a und 5c dargestellt ist, auf dem Gestell auf und sind daran angeschweißt. Das heißt, ein auf einem solchen Paar von Längsträgern 300, 301 mit einer geeigneten Klemmvorrichtung befestigter Bandlaufkörper kann entlang der Längsrichtung verschoben werden und dabei insbesondere über das Ende eines Querteils 200, 200' hinausreichen. In dieser in Fig. 5 gezeigten beispielhaften Ausführungsform soll das Eingangsband 17 auf den Längsträgern 300, 301 befestigt sein, das Transportband 18 auf dem Paar von Längsträgern 302, 303 sowie das Ausgangsband 20 auf dem Paar von Längsträgern 300', 301' befestigt sein. Zwischen dem Paar von Längsträgern 302, 303 und dem Paar von Längsträgern 300', 301' ist Platz für die Wägezelle 14 mit zugehörigem Wägeband 15 gelassen.

Die Einlassöffnungen der in diesem Ausführungsbeispiel vorhandenen Hohlkörper 1, 200, 200' sind in den Figuren nicht gezeigt, allerdings ist die Einfüllöffnung an einem oberen Bereich der Hohlkörper und die Auslassöffnung an einem unteren Bereich der Hohlkörper angeordnet, wie die Auslassöffnung 254 in Fig. 6d. Dort ist auch das untere Ende des Entlüftungsrohrs 255 angedeutet.

In den Fig. 6a bis 6d ist das Gestell aus Fig. 5 nochmals dargestellt, wobei hier einige Komponenten mit abgebildet sind: Auf den Längsträgern 300, 301 ist das Eingangsband 17 montiert. Dabei ist gut zu erkennen, dass sich das Eingangsband 17 über das Querteil 200 hinaus nach außen erstreckt. Des weiteren sind die Auswurfbehälter 21, 22 mit abgebildet, die in Bandlaufrichtung gesehen knapp vor dem Querteil 200' montiert sind. Im übrigen sind die Komponenten genauso wie im Ausführungsbeispiel zur Fig. 2 am Gestell angebracht, mit Ausnahme der Bandlaufkörper 17, 18 und 20. Diese waren gemäß Fig. 2 auf Trägern 13.1 bis 13.4 montiert, aber gemäß einem erfindungsgemäßen Gestell (insbesondere in Fig. 6c gezeigt) auf den Längsträgern 300, 301; 300', 301' und 302, 303. Die Anordnung weiterer Komponenten erfolgt wie in Fig. 2 gezeigt.

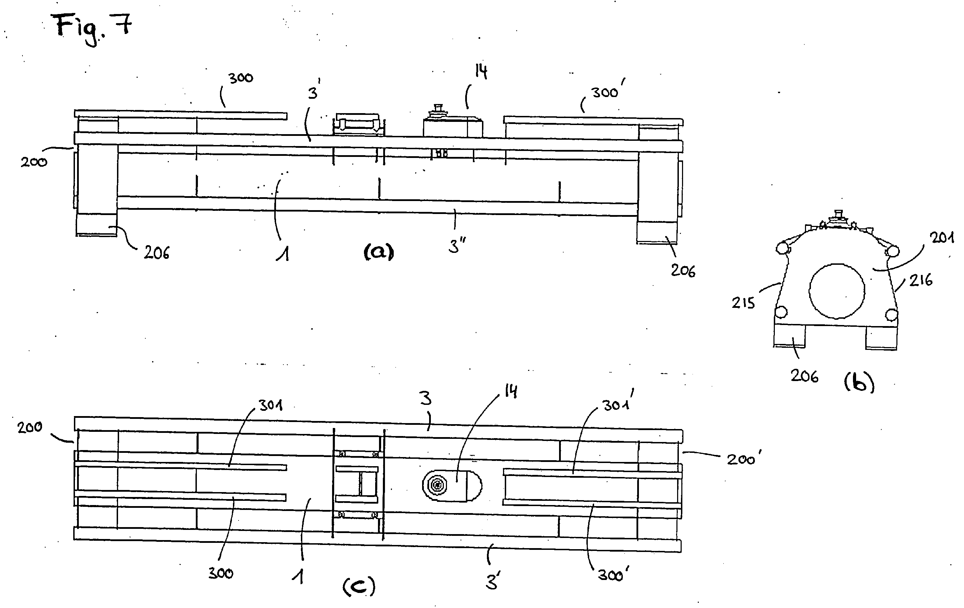

Ein weiteres Ausführungsbeispiel dieser Erfindung ist in den Fig. 7a bis 7c dargestellt. Im Unterschied zum ersten Ausführungsbeispiel dieser Erfindung (Figuren 5 und 6) sind die ebenen, parallelen Seitenflächen der hohlkörperartigen Querteile an ihren Seitenkanten 215, 216 nach innen ausgebuchtet, was besonders gut in Fig. 7c gezeigt ist. Auf diese Weise ragt das Seitenteil 200 bzw. 200' quer zur Längsrichtung nicht über die weiteren Gestellteile 3, 3', 3" hinaus, so dass Komponenten wie z. B. die Auswurfbehälter 21, 22 direkt an der Stelle bezogen auf die Längsrichtung montiert werden können, an der auch das Querteil 200, 200' selbst angeordnet ist. In Fig. 7c sind des weiteren noch Hochstellelemente 206 gezeigt, die am Bodenbereich 208 der Mantelfläche 203 angeschweißt sind. Diese in Form zusätzlicher Hohlkörper ausgebildeten Hochstellelemente kommen dann zu Einsatz, wenn z. B. nachträglich die Gestellhöhe geändert werden muss. Auch in diesem Ausführungsbeispiel sind (in Fig. 7 allerdings nicht abgebildete) höhenverstellbare Füße angeschraubt, und zwar an die dem Boden zugewandte Seite der Hochstellelemente 260.

Es wir darauf hingewiesen, dass die in diesen Ausführungsbeispielen dargestellten , Verwirklichungen der vorliegenden Erfindung lediglich beispielhaft anzusehen sind. So können z. B. die plattenartigen Querteile 2, 2' der in den Fig. 1 bis 4 beschriebenen Ausführungsbeispiele durch die hohlkörperartigen Querteile 200, 200' gemäß Fig. 5 ersetzt werden, ohne zusätzlich die Trägerstege 310 bis 313 und die Längsträger 300 bis 303 oder nur einen Teil davon einzusetzen. Genausogut können die Längsträger 300 bis 303 oder auch nur ein Teil davon eingesetzt werden, wobei die Querteile 2, 2' wie in Fig. 1 gezeigt, plattenartig sind, oder an einem Ende ein plattenartiges Querteil 2 und am anderen Ende ein hohlkörperartiges Querteil 200' eingesetzt wird.

### Verzeichnis der Bezugszeichen

- 1: zentrales Rohr
- 2, 2': Querteil
- 3, 3', 3": Gestellteil

- 4, 4': Außenkante
- 5, 5': Füße

- 6.1-6.5: untere Querstege

- 7: Kante
- 8.1-8.3: Halteplatten
- 9: Außenkante
- 10.1, 10.2: Halteplatten

- 11.1, 11.2: Haltesteg
- 12.1, 12.2: obere Querstege
- 13.1-13.4: Träger
- 14: Wägezelle
- 15: Wägeband
- 16: Gehäuse
- 17: Eingangsband
- 18: Transportband
- 19: Metalldetektor
- 20: Ausgangsband
- 21, 22: Auswurfbehälter
- 50, 50': Füße
- 51: Distanzelemente
- 52: oberes Ende

- 200, 200': hohlkörperartiges Querteil
- 201, 202: Seitenfläche
- 203: Mantelfläche
- 204: Deckenbereich
- 205, 206: Seitenwandbereiche
- 208: Bodenbereich
- 210: Bodenkante
- 211: Deckenkante
- 215, 216: Seitenkanten
- 250: Füße
- 254: Auslassöffnung
- 255: Entlüftungsrohr
- 260: Hochstellelemente
- 300; 301: Längsträger
- 300', 301': Längsträger
- 302, 303: Längsträger
- 304: Ende
- 310, 311: Trägerstege
- 312,313: Trägerstege

## Patentansprüche

1. Gestell für eine Kontrollwaage, die eine an dem Gestell abgestützte Wägezelle (14) und ein auf der Wägezelle (14) abgestütztes, in einer Längsrichtung umlaufendes Wägeband (15) zum Transport des Wägegutes aufweist, mit einem sich in der Längsrichtung erstreckenden Längsteil (1) des Gestells, an dem mindestens ein sich quer zur Längsrichtung erstreckendes, der Abstützung des Gestells auf dem Boden dienendes Querteil (200, 200') des Gestells festgelegt ist, **dadurch gekennzeichnet, dass** das Querteil (200, 200') in der Form eines Hohlkörpers ausgebildet ist.

2. Gestell nach Anspruch 1, **dadurch gekennzeichnet, dass** der Hohlkörper (200, 200') eine im wesentlichen quaderartige Grundform aufweist.

3. Gestell nach Anspruch 1 oder 2, **dadurch gekennzeichnet, dass** der Hohlkörper (200, 200') eine im wesentlichen ebene erste Seitenfläche (201) aufweist, die sich quer zur Längsrichtung erstreckt.

4. Gestell nach Anspruch 3, **dadurch gekennzeichnet, dass** der Hohlkörper (200, 200') eine im wesentlichen ebene, parallel zur ersten Seitenfläche (201) angeordnete zweite Seitenfläche (202) aufweist.

5. Gestell nach Anspruch 4, **dadurch gekennzeichnet, dass** die erste und zweite Seitenfläche (201, 202) durch plattenartige Seitenwände des Hohlkörpers (200, 200') gebildet sind.

6. Gestell nach einem der Ansprüche 4 oder 5, **dadurch gekennzeichnet, dass** der Hohlkörper (200, 200') eine die Kanten der beiden Seitenwände (201, 202) verbindende Mantelfläche (203) aufweist.

7. Gestell nach Anspruch 5 oder 6, **dadurch gekennzeichnet, dass** eine einer Bodenkante (210) entgegengesetzte Deckenkante (211) einer jeden plattenartigen Seitenwand (201, 202) konvex ausgebildet ist.

8. Gestell nach Anspruch 7, **dadurch gekennzeichnet, dass** ein deckenseitiger Bereich (204) der Mantelfläche (203) konform der konvexen Deckenkante (211) konvex ausgebildet ist.

9. Gestell nach einem der Ansprüche 6 bis 8, **dadurch gekennzeichnet, dass** ein sich zwischen den Bodenkanten (210) und den Deckenkanten (211) erstreckender seitlicher Bereich (205, 206) der Mantelfläche (203) bezogen auf die Längsrichtung nach außen gewölbt ist.

10. Gestell für eine Kontrollwaage, die eine an dem Gestell abgestützte Wägezelle (14) und ein auf der Wägezelle (14) abgestütztes, in einer Längsrichtung umlaufendes Wägeband (15) zum Transport des Wägegutes aufweist, mit einem sich in der Längsrichtung erstreckenden Längsteil (1) des Gestells, an dem mindestens ein sich quer zur Längsrichtung erstreckendes, der Abstützung des Gestells auf dem Boden dienendes Querteil (2, 2'; 200, 200') des Gestells festgelegt ist, insbesondere nach einem der Ansprüche 1 bis 9, **dadurch gekennzeichnet, dass** mindestens ein sich parallel zu dem Längsteil (1) erstreckender Längsträger (300, 301; 300', 301'; 302, 303) vorgesehen ist, der ein zur Wägezelle (14) weisendes und davon beabstandetes Ende (304) aufweist.

11. Gestell nach einem der Ansprüche 1 bis 10, **dadurch gekennzeichnet, dass** an den beiden Längs-Endbereichen des Längsteils (1) je eines der Querteile (2, 2'; 200, 200') angeordnet ist.

12. Gestell nach einem der vorhergehenden Ansprüche, **dadurch gekennzeichnet, dass** es mindestens einen plattenförmigen, mit seiner Hauptebene quer zur Längsrichtung angeordneten Trägersteg (310, 311; 312, 313) aufweist, dessen dem Boden zugewandte Seite auf der dem Boden abgewandten Seite des Längsteils (1) festgelegt ist.

13. Gestell nach Anspruche 12, **dadurch gekennzeichnet, dass** jeder der Längsträger (300, 301; 300', 301'; 302, 303) auf mindestens einem der plattenförmigen Trägerstege (310, 311, 312, 313) abgestützt ist.

14. Gestell nach Anspruch 12 oder 13, **dadurch gekennzeichnet, dass** zwei der Längsträger (300, 301; 300', 301') ein Paar bilden, in dem sie zueinander parallel und von einander beabstandet sind und sich von einem Bereich nahe eines Längs-Endbereichs des Längsteils (1) aus in Richtung auf die Mitte des Längsteils (1) erstrecken, wobei das Paar an einem Querteil (2, 2', 200, 200') und mindestens einem Trägersteg (310, 311) abgestützt und festgelegt ist.

15. Gestell nach einem der Ansprüche 12 bis 14, **dadurch gekennzeichnet, dass** zwei der Längsträger (302, 303) ein Paar bilden, in dem sie zueinander parallel und voneinander beabstandet sind und nahe eines mittigen Bereichs des Längsträgers (1) auf mindestens zwei Trägerstegen (312, 313) abgestützt und festgelegt sind.

16. Gestell nach Anspruch 14 oder 15, **dadurch gekennzeichnet, dass** jeweils die beiden einander zugewandten Enden der Längsträger (300, 301; 300', 301', 302, 303) eines Paares quer zur Längsrichtung miteinander fluchten.

17. Gestell nach einem der Ansprüche 14 bis 16, **dadurch gekennzeichnet, dass** der gegenseitige Abstand der Längsträger (300, 301; 300', 301', 302, 303) eines Paares gleich oder kleiner ist als die Breite eines dem Transport des Wägegutes dienenden Bandlaufkörpers (17).

18. Gestell nach einem der Ansprüche 14 bis 17, **dadurch gekennzeichnet, dass** eines der Paare von Längsträgern (300, 301; 300', 301') auf einem der Querteile (2, 2', 200, 200') abgestützt ist und über das der Wägezelle (14) abgewandten Ende des Querteils (2, 2'; 200, 200') hinaus, und/oder über das jeweilige stirnseitige Ende des Längsteils (1) hinaus auskragt.

19. Gestell nach einem der Ansprüche 14 bis 18, **dadurch gekennzeichnet, dass** an einem dem Boden abgewandten Bereich eines der Trägerstege (310, 311, 312, 313) zwei beabstandete Nasen ausgebildet sind, auf denen ein daran festgelegtes Paar von Längsträgern (300, 301; 300', 301'; 302, 303) in Längsrichtung im wesentlichen bodenparallel ausgerichtet ist.

20. Gestell nach einem der Ansprüche 10 bis 19, **dadurch gekennzeichnet, dass** jeder der Längsträger (300, 301; 300', 301'; 302, 303) einen kleineren Querschnitt als das Längsteil (1) aufweist.

21. Gestell nach einem der vorhergehenden Ansprüche, **dadurch gekennzeichnet, dass** mindestens ein sich parallel zu dem Längsteil (1) erstreckendes und an jedem der Querteile (2, 2'; 200, 200') festgelegtes weiteres Gestellteil (3, 3', 3") vorgesehen ist.

22. Gestell nach Anspruch 21, **dadurch gekennzeichnet, dass** jedes der weiteren Gestellteile (3, 3', 3") einen kleineren Querschnitt als das Längsteil (1) aufweist.

23. Gestell nach einem der Ansprüche 21 oder 22, **dadurch gekennzeichnet, dass** jeder der Längsträger (300, 301; 300', 301'; 302, 303) einen kleineren Querschnitt als die weiteren Gestellteile (3, 3', 3") aufweist.

24. Gestell nach einem der Ansprüche 21 bis 23, **dadurch gekennzeichnet, dass** das Längsteil (1) an einem inneren Bereich eines Querteils (2, 2'; 200, 200') und jedes sich parallel dazu erstreckende weitere Gestellteil (3, 3', 3") an einem dem inneren Bereich umgebenden Randbereich des Querteils (2, 2'; 200, 200') angeordnet ist.

25. Gestell nach Anspruch 24, **dadurch gekennzeichnet, dass** die weiteren Gestellteile (3, 3', 3") in den Eckbereichen eines Querteils (2, 2'; 200, 200') angeordnet sind, und insbesondere die seitlichen Bereiche (205, 206)/Seitenkanten des Querteils (200, 200'/2, 2') derart eingebuchtet sind, dass das Querteil (2, 2'; 200, 200') in einer Richtung quer zur Längsrichtung im wesentlichen nicht über die weiteren Gestellteile (3, 3', 3") hinausragt.

26. Gestell nach einem der Ansprüche 1 bis 25, **dadurch gekennzeichnet, dass** das Längsteil (1) und/oder ein weiteres Gestellteil (3, 3', 3") eines der Querteile (2, 2', 200, 200') durchsetzt und/oder sich darüber hinaus erstreckt.

27. Gestell nach Anspruch 26, **dadurch gekennzeichnet, dass** die jeweils benachbarten Enden der Teile (1, 3, 3', 3") quer zur Längsrichtung miteinander fluchten.

28. Gestell nach einem der vorhergehenden Ansprüche, **dadurch gekennzeichnet, dass** der Querschnitt des Längsteils (1) und/oder jedes sich dazu parallel erstreckenden Längsträgers (300, 301; 300', 301'; 302, 303) und/oder jedes sich dazu parallel erstreckenden weiteren Gestellteils (3, 3', 3") in seinem dem Boden abgewandten Bereich konvex geformt ist.

29. Gestell nach einem der Ansprüche 10 bis 28 **dadurch gekennzeichnet, dass** einer der Längsträger (300, 301, 300', 301', 302, 303) einen elliptischen, insbesondere kreisförmigen Querschnitt besitzt.

30. Gestell nach einem der vorherigen Ansprüche, **dadurch gekennzeichnet, dass** das Längsteil (1) als Hohlrohr ausgebildet ist.

31. Gestell nach einem der vorhergehenden Ansprüche, **dadurch gekennzeichnet, dass** das Längsteil (1) und/oder eines der hohlkörperartigen Querteile (200, 200') mit einem Ballaststoff füllbar sind/ist und dazu eine insbesondere mit einer Schnellkupplung versehene Einfüllöffnung aufweisen/aufweist.

32. Gestell nach Anspruch 31, **dadurch gekennzeichnet, dass** das Längsteil (1) und/oder eines der hohlkörperartigen Querteile (200, 200') mit einer insbesondere schraubverschlussartigen Auslassöffnung (254) versehen sind/ist.

33. Gestell nach Anspruch 32, **dadurch gekennzeichnet, dass** in einem der Hohlkörper (1, 200, 200') ein Entlüftungsrohr (255) vorgesehen ist, das sich insbesondere von einem unteren Bereich bis zu einem obersten Bereich des Innenraums des Hohlkörpers (1, 200, 200') erstreckt.

34. Gestell nach Anspruch 31, **dadurch gekennzeichnet, dass** es sich bei dem Ballaststoff um ein antiseptisches Medium handelt.

35. Gestell nach Anspruch 34, **dadurch gekennzeichnet, dass** es sich bei dem antiseptischen Medium um H₂O mit beigegebenem Desinfektionsmittel handelt.

36. Gestell nach Anspruch 34 oder 35, **dadurch gekennzeichnet, dass** das antiseptische Medium eingefärbt ist.

37. Gestell nach einem der vorhergehenden Ansprüche, **dadurch gekennzeichnet, dass** an einem der dem Querteile (2, 2'; 200, 200') zur Abstützung des Gestells auf dem Boden dienende, insbesondere höhenverstellbare Füße (5, 5', 50, 50'; 250, 250') befestigt sind.

38. Verfahren zur Stabilisierung eines Gestells für eine Kontrollwaage, bei dem in einem ersten Schritt eine Einfüllöffnung eines Hohlkörpers (1, 200, 200') geöffnet wird, in einem zweiten Schritt der zugehörige Hohlkörper (1, 200, 200') mit einem Ballaststoff gefüllt wird und in einem dritten Schritt die Einfüllöffnung wieder verschlossen wird.

39. Verfahren nach Anspruch 38, **dadurch gekennzeichnet, dass** es sich bei dem Ballaststoff um ein antiseptisches Medium handelt.

40. Verfahren nach Anspruch 39, **dadurch gekennzeichnet, dass** es sich bei dem antiseptischen Medium um H₂O mit beigegebenem Desinfektionsmittel handelt.

41. Verfahren nach Anspruch 39 bis 40, **dadurch gekennzeichnet, dass** das antiseptische Medium eingefärbt ist.

42. Verfahren nach einem der Ansprüche 38 bis 41, **dadurch gekennzeichnet, dass** es am Einsatzort des Gestells stattfindet.

43. Verfahren nach einem der Ansprüche 38 bis 42, **dadurch gekennzeichnet, dass** es sich bei dem Gestell um ein Gestell nach einem der Ansprüche 1 bis 37 handelt.
